# EUROPÄISCHE PATENTSCHRIFT

(11) **EP 4 288 678 B1**
(45) Veröffentlichungstag und Bekanntmachung des Hinweises auf die Patenterteilung: **02.04.2025**
(21) Anmeldenummer: 22700537.8
(22) Anmeldetag: 13.01.2022
(51) Int. Cl.: F16H 21/40, E05B 81/14, E05B 81/30

(54) **ELEKTROMOTORISCHER ANTRIEB FÜR KRAFTFAHRZEUG-TECHNISCHE ANWENDUNGEN**
ELECTROMOTIVE DRIVE FOR MOTOR VEHICLE APPLICATIONS
ENTRAÎNEMENT ÉLECTROMOTEUR POUR DES APPLICATIONS DE VÉHICULE MOTORISÉ

(30) Priorität: 04.02.2021 DE 102021102560
(43) Veröffentlichungstag der Anmeldung: 13.12.2023
(73) Patentinhaber: Kiekert Aktiengesellschaft, 42579 Heiligenhaus (DE)
(72) Erfinder: SZEGENY, Peter, 51766 Engelskirchen (DE); INAN, Ömer, 46282 Dorsten (DE); SCHIFFER, Holger, 40668 Meerbusch (DE); SCHOLZ, Michael, 45136 Essen (DE); REUSCH, Manuel, 40589 Düsseldorf (DE)
(74) Vertreter: Kiekert AG Patentabteilung
(86) Internationale Anmeldenummer: PCT/DE2022/100022
(87) Internationale Veröffentlichungsnummer: WO 2022/167028

(56) Entgegenhaltungen:
- EP-A1- 0 967 350
- EP-A1- 1 074 681
- DE-A1- 10 208 722
- DE-A1- 3 319 354
- US-B2- 6 773 042

## Beschreibung

Die Erfindung betrifft einen elektromotorischen Antrieb für kraftfahrzeug-technische gemäss Anspruch 1.

Elektromotorische Antriebe für kraftfahrzeug-technische Anwendungen zeichnen sich durch einen robusten Aufbau und die Möglichkeit des Betriebs mit einer Niederspannung von typischerweise 12 V oder 24 V Gleichspannung aus. Dadurch sind oftmals spezielle Maßnahmen zur Übersetzung der Drehbewegung des Elektromotors erforderlich, um auch kraftraubende Betätigungen zu realisieren. Solche Übersetzungen werden im Regelfall dadurch zur Verfügung gestellt, dass der Elektromotor mit einer auf seiner Abtriebswelle befindlichen Schnecke mit einer äußeren Verzahnung des Schneckenrades kämmt. Außerdem verfügt die Nockenkontur typischerweise über eine Spiralkante, um den hieran anliegenden und mithilfe der Spiralkante der Nockenkontur beaufschlagbaren Hebel mit zunehmendem Drehmoment beaufschlagen zu können.

Das hat sich grundsätzlich bewährt, weshalb solche elektromotorischen Antriebe beispielsweise zur Steuerung eines Verschlusses eingesetzt werden, wie dies die gattungsbildende DE 197 02 420 C5 beschreibt. Tatsächlich lassen sich mit dem auf diese Weise realisierten Stellelement bzw. dem Stellantrieb die Funktionsstellungen "offen", "verriegelt", "Diebstahlsicherung" und schließlich "Kindersicherung" realisieren, die zu Drehbewegungen des Schneckenrades von 0° bzw. 360°, 90°, 180° und schließlich 270° korrespondieren. Das hat sich grundsätzlich bewährt.

Daneben kommen vergleichbare elektromotorische Antriebe neuerdings auch in Verbindung mit der Beaufschlagung von Verriegelungsaktuatoren bei Ladevorrichtungen im Zusammenhang mit Elektro- oder Hybrid-Kraftfahrzeugen zum Einsatz. Andere Anwendungsfälle solcher elektromotorischen Antriebe können darin liegen, für eine Hebe- und Senkbewegung einer Fensterscheibe, eine Spiegelverstellung oder auch eine Sitzverstellung zu sorgen. Auch Deckelent-/verriegelungen sind hiermit umsetzbar. Daneben kommen solche elektromotorischen Antriebe im Innern von Kraftfahrzeug-Schlössern oder auch als Zuzieh-/Öffnungsantrieb zum Einsatz. Immer sind diese Antriebe durch einen schnelllaufenden Elektromotor gekennzeichnet, dessen hohe Umdrehungszahl in eine relativ langsame Bewegung mit demgegenüber gesteigerter Kraft bzw. erhöhten Drehmoment und folglich großer Übersetzung umgewandelt wird.

Zwar kann man in diesem Zusammenhang zwischengeschaltete Getriebe vorsehen. Diese erhöhen jedoch den technologischen Aufwand und die Reibung, werden folglich in der Regel vermieden und nicht als zielführend betrachtet. Gleichwohl gibt es nach wie vor und unverändert Bestrebungen, die schon bisher zur Verfügung gestellte Übersetzung erhöhen zu wollen. Dazu stehen momentan keine konstruktiv einfachen und kostengünstigen Lösungen zur Verfügung. Hier will die Erfindung insgesamt Abhilfe schaffen.

EP 0 967 350 A1 stellt den nächstliegenden Stand der Technik dar.

Der Erfindung liegt das technische Problem zugrunde, einen derartigen elektromotorischen Antrieb für kraftfahrzeug-technische Anwendungen so weiter zu entwickeln, dass eine Erhöhung der Übersetzung bei zugleich konstruktiv einfachem und kostengünstigem Aufbau zur Verfügung gestellt wird.

Zur Lösung dieser technischen Problemstellung schlägt die Erfindung bei einem gattungsgemäßen elektromotorischen Antrieb für kraftfahrzeug-technische Anwendungen vor, dass die Nockenkontur zur Realisierung einer mehr als vollen Umdrehung (>360°) eingerichtet ist.

Um in diesem Zusammenhang die mehr als volle Umdrehung (> 360°) des Antriebsrades, insbesondere Schneckenrades, und damit der Nockenkontur im Detail realisieren und umsetzen zu können, ist der Hebel mit wenigstens einem ersten Hebelanschlag und das Antriebsrad insbesondere Schneckenrad, mit einem Radanschlag ausgerüstet, wobei beide Anschläge positionsabhängig wechselwirken. D. h., während der Hebelanschlag an dem von der Nockenkontur beaufschlagten Hebel angeordnet ist, findet sich der Radanschlag an dem Antriebsrad, insbesondere Schneckenrad. Durch die Bewegung des Antriebsrades, insbesondere Schneckenrades, und damit der Nockenkontur sowie als Folge hiervon die hierdurch in der Regel erzeugte Schwenkbewegung des Hebels können beide Anschläge positionsabhängig wechselwirken. Dabei wird man meistens so vorgehen, dass der erste Hebelanschlag mit dem Radanschlag nach mehr als der vollen Umdrehung des Antriebsrades, insbesondere Schneckenrades, als Endanschlag wechselwirkt.

Vorteilhafterweise und somit besonders bevorzugt ist das Antriebsrad als Schneckenrad ausgebildet. Es ist jedoch auch denkbar, dass Antriebsrad als Zahnrad oder Ähnliches ausgebildet ist.

Insgesamt geht die Erfindung von der Erkenntnis aus, dass der Hebel und mit ihm der erste Hebelanschlag durch die Beaufschlagung seitens der Nockenkontur bei einer Verfahrbewegung des Antriebsrades, insbesondere Schneckenrades, verschwenkt wird. Sobald das Antriebsrad, insbesondere Schneckenrad, mehr als die volle Umdrehung absolviert hat, kommt der erste Hebelanschlag mit dem Radanschlag in Eingriff und wird die zuvor angegebene Wechselwirkung beobachtet. Dementsprechend fungieren der erste Hebelanschlag und der Radanschlag nach dieser mehr als vollen Umdrehung des Antriebsrades, insbesondere Schneckenrades, zusammengenommen als Endanschlag, sodass hierdurch das Antriebsrad, insbesondere Schneckenrad, abgebremst wird und keine "Nachlaufbewegungen" vollführt.

Im Stand der Technik nach der DE 199 48 052 A1 oder auch nach der DE 103 61 168 A1 werden zwar bereits Anschläge in diesem Kontext beschrieben, allerdings nicht die Kombination aus erstem Hebelanschlag und Radanschlag, die positionsabhängig miteinander wechselwirken.

Die Erfindung geht von der weiteren Erkenntnis aus, dass die Realisierung einer mehr als vollen Umdrehung seitens der Nockenkontur dazu genutzt bzw. eingesetzt werden kann, dass mithilfe der Nockenkontur eine im Vergleich zum Stand der Technik nochmals erhöhte Übersetzung auf den Hebel übertragen werden kann. Dadurch ist der Hebel in der Lage, mit einem im Vergleich zum Stand der Technik gesteigerten Drehmoment die gewünschten Stellbewegungen zu vollführen. Hierbei kann es sich um die Darstellung von Funktionszuständen im Innern eines Kraftfahrzeug-Schlosses, eine Zuzieh- oder Öffnungsbewegung an einer Kraftfahrzeugtür, das Heben oder Senken einer Kraftfahrzeugscheibe etc. handeln, um nur einige Anwendungsbeispiele und mögliche von dem Hebel beaufschlagbare Stellelemente zu nennen.

Damit der elektromotorische Antrieb gleichwohl nach Beendigung einer zugehörigen Stellbewegung abgebremst wird und gestoppt werden kann und folglich die zuvor beschriebenen "Nachlaufbewegungen" nicht beobachtet werden, kommt es am Ende der mehr als vollen Umdrehung des Antriebsrades dazu, dass der erste Hebelanschlag zusammen mit dem Radanschlag als Endanschlag fungieren und einen solchen gemeinsam definieren. Da bei diesem Vorgang die Schwenkbewegung des Hebels und damit des ersten Hebelanschlages genutzt wird, kommt es vorab und während der Schwenkbewegung des Hebels und auch der Drehbewegung des Antriebsrades nicht zu etwaigen Kollisionen des ersten Hebelanschlages mit dem Radanschlag. Sondern der erste Hebelanschlag schwenkt praktisch erst dann in den typischerweise kreisförmigen Weg des Radanschlages außenumfangsseitig des Antriebsrades ein, wenn der Hebel seine endgültige Schwenkposition erreicht hat. Das ist nach mehr als der vollen Umdrehung des Antriebsrades der Fall. Zu diesem Zweck ist der erste Hebelanschlag typischerweise an einem achsfernen Ende des Hebels angeordnet.

Bei dem Hebel handelt es sich meistens um einen Zweiarmhebel mit einem ersten Arm und einem zweiten Arm. Der erste Arm ist endseitig mit dem ersten Hebelanschlag ausgerüstet. Demgegenüber arbeitet der zweite Arm auf das Stellelement. Das kann mittelbar oder unmittelbar erfolgen. Die beiden Arme können gleich oder unterschiedlich lang im Vergleich zur mittigen Achse bzw. Drehachse ausgeprägt sein.

Neben der Möglichkeit, dass der erste Hebelanschlag mit dem Radanschlag als Endanschlag wechselwirkt, und zwar nach Beendigung einer vollständigen Stellbewegung des Hebels, d. h. nach mehr als der vollen Umdrehung des Antriebsrades, kann der erste Hebelanschlag zusammen mit der Nockenkontur auch als weiterem Endanschlag wechselwirken. In diesem Fall wird dieser Endanschlag regelmäßig zu Beginn der Fahrbewegung definiert und realisiert. Zu diesem Zweck verfügt die Nockenkontur typischerweise über eine vorzugsweise achsnahe Ausnehmung für den Hebel.

Der Hebel kann folglich in die Ausnehmung eintauchen, und zwar zu Beginn der Stellbewegung des Antriebsrades und damit der Nockenkontur. Auf diese Weise ist die Auslegung vorteilhaft so getroffen, dass die Ausnehmung mit dem ersten Hebelanschlag zu Beginn der Drehbewegung des Antriebsrades als weiterem Endanschlag wechselwirkt. Ausgehend von der Positionierung des Hebels bzw. seines ersten Armes mit dem ersten Hebelanschlag im Innern der Ausnehmung führt nun die Drehbewegung des Antriebsrades dazu, dass der Hebel zunehmend mithilfe der Nockenkontur verschwenkt wird, und zwar bezogen auf eine Achse des Antriebsrades in der Regel radial auswärts. Diese Schwenkbewegung wird bis zum Ende der Beaufschlagung des Hebels durch die Nockenkontur fortgeführt und endet dann, wenn das Antriebsrad mehr als die volle Umdrehung vollführt hat und dann der erste Hebelanschlag mit dem Radanschlag am Antriebsrad als Endanschlag wechselwirkt.

Im Rahmen der Erfindung ist der Hebel aber auch mit einem weiteren zweiten Hebelanschlag ausgerüstet werden. Dabei ist die Auslegung zusätzlich noch so getroffen, dass der weitere zweite Hebelanschlag mit dem Radanschlag ebenfalls positionsabhängig wechselwirkt, wie dies auch für den ersten Hebelanschlag und den Radanschlag gilt.

Dabei wird meistens so vorgegangen, dass der erste Hebelanschlag mit dem Radanschlag nach mehr als der vollen Umdrehung des Antriebsrades als Endanschlag wie gehabt wechselwirkt und zusätzlich der zweite Hebelanschlag mit dem Radanschlag zu Beginn der Drehbewegung des Antriebsrades als weiterer Endanschlag bei der Erfindung zusammenwirkt. D. h., zu Beginn der Drehbewegung des Antriebsrades definieren der zweite Hebelanschlag und der Radanschlag einen Endanschlag. Am Ende der Drehbewegung des Antriebsrades bei beiden Varianten wechselwirken der erste Hebelanschlag und der Radanschlag zusammengenommen als weiterer Endanschlag. Dadurch wird die Drehbewegung des Antriebsrades zwischen den beiden Endanschlägen mechanisch festgelegt und sind etwaige Nachlaufbewegungen bei der Beaufschlagung des Hebels ebenso wie bei der Reversierbewegung des elektromotorischen Antriebes nicht zu befürchten. Auf diese Weise lässt sich das mithilfe des Hebels beaufschlagte Stellelement besonders genau verfahren.

Im Ergebnis wird ein elektromotorischer Antrieb für kraftfahrzeug-technische Anwendungen zur Verfügung gestellt, der aufgrund der Möglichkeit seiner Nockenkontur, eine mehr als volle Umdrehung realisieren zu können, in der Lage ist, eine besonders hohe Übersetzung ausgehend vom Elektromotor über das Antriebsrad und die Nockenkontur auf den Hebel zur Beaufschlagung des gewünschten Stellelementes übertragen zu können. Beispielsweise mag der Hebel an eine Drehfalle eines Kraftfahrzeug-Türschlosses mittelbar oder unmittelbar angeschlossen sein, um diese im Sinne einer Zuziehbewegung zu beaufschlagen und damit eine zugehörige Kraftfahrzeug-Tür zuzuziehen. Selbstverständlich sind auch andere Anwendungen denkbar, die einleitend bereits beschrieben wurden.

So ist zusätzlich Gegenstand der Erfindung ein Kraftfahrzeug-Schloss und insbesondere Kraftfahrzeug-Türschloss, welches mit einem solchen elektromotorischen Antrieb ausgerüstet ist. Der Antrieb kann dabei eingesetzt werden, um das fragliche Kraftfahrzeug-Schloss elektrisch öffnen zu können. Das gelingt mittelbar durch betätigen eines Auslösehebels oder unmittelbar, indem die Sperrklinke direkt beaufschlagt wird. Darüber hinaus können mithilfe des betreffenden Antriebes Schlossfunktionen wie eine Kindersicherung, eine Diebstahlsicherung, eine Zentralverriegelung etc. einzeln oder in Kombination eingelegt und realisiert werden.

Das Antriebsrad ist in der Regel als Spritzgussteil ausgeführt, sodass sich das Antriebsrad inklusive Nockenkontur besonders einfach und kostengünstig herstellen lässt. Hier haben sich Ausführungsformen aus Metall oder Kunststoff bewährt. I. V. m. dem wenigstens einen zusätzlichen Hebelanschlag bzw. der beiden Hebelanschläge wird folglich ein konstruktiv besonders einfacher Aufbau zur Verfügung gestellt. Tatsächlich kann der Hebel für sich genommen ebenfalls aus Kunststoff oder Metall gefertigt werden. Dadurch werden nur geringe Herstellungskosten beobachtet. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Figuren 1A und 1B: eine erste Variante der Erfindung bei einer dargestellten Drehbewegung des Antriebsrades und
- Figuren 2A und 2B: eine abgewandelte zweite Ausführungsversion.

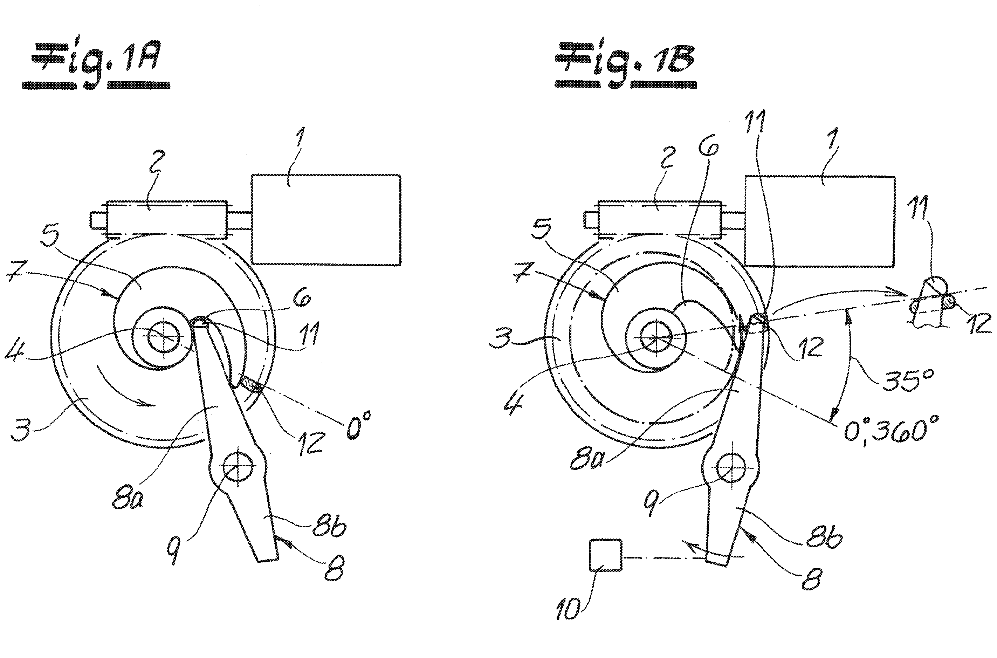

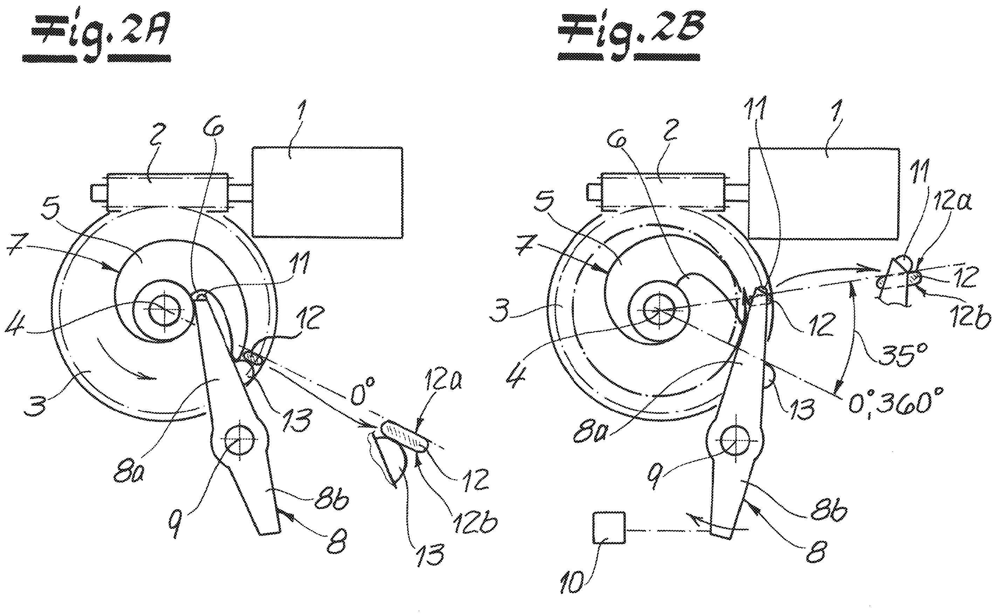

In den Figuren ist ein elektromotorischer Antrieb für kraftfahrzeug-technische Anwendungen dargestellt. Der fragliche Antrieb verfügt zu diesem Zweck über einen Elektromotor 1, der folgerichtig und typischerweise mit einer Nieder-Gleichspannung von beispielsweise 12 V, 24 V oder 48 V betrieben wird. Der Elektromotor 1 weist eine auf seiner Abtriebswelle angeordnete Abtriebsschnecke 2 auf, die mit einer außenseitigen Verzahnung eines Schneckenrades 3 kämmt. Dadurch kann das Schneckenrad 3 insbesondere in den Figuren 1B und 2B dargestellte Gegenuhrzeigersinnbewegungen um ihre Achse 4 vollführen. Im Zuge dieser Gegenuhrzeigersinnbewegung ausgehend von der jeweiligen Grund- oder Ruheposition nach den Figuren 1A und 2A absolviert das Schneckenrad 3 nach dem Ausführungsbeispiel eine mehr als volle Umdrehung (>360°). Das kann man insbesondere anhand der Fig. 1B nachvollziehen, nach welcher das Schneckenrad 3 und eine auf bzw. an ihr angeordnete Nockenkontur 5 eine volle Umdrehung beim Übergang von der Fig. 1A zur Fig. 1B bzw. von der Fig. 2A zur Fig. 2B vollführen und daran anschließend ein weiterer Winkel von ca. 35° im Beispielfall überstrichen wird. D. h., das Schneckenrad 3 und mit ihm die Nockenkontur 5 absolvieren in den beiden Ausführungsbeispielen einen Winkel von insgesamt nahezu 400°, nämlich 360° + ca. 35°. Das gilt selbstverständlich nur beispielhaft und ist keinesfalls einschränkend.

Die Stellbewegung des elektromotorischen Antriebes und folglich des Schneckenrades 3 im Sinne der dargestellten Gegenuhrzeigersinnbewegung um die zugehörige Achse 4 korrespondiert dazu, dass die Nockenkontur 5 am Schneckenrad 3 einen Hebel 8 aus Kunststoff oder Metall beaufschlagt. Zu diesem Zweck ist die Nockenkontur 5 mit einer Spiralkante 7 ausgerüstet, die von einer achsnahen Ausnehmung 6 der Nockenkontur 5 ausgeht. D. h., das Schneckenrad 3 ist mit der spiralförmigen Nockenkontur 5 ausgerüstet, die ihrerseits über die achsnahe Ausnehmung 6 einerseits und die Spiralkante 7 andererseits verfügt. Die Spiralkante 7 geht dabei von der Ausnehmung 6 aus und zeichnet sich durch einen in der Betätigungsrichtung bzw. im Gegenuhrzeigersinn wachsenden Radius gegenüber der Achse 4 aus, sodass der mit der mithilfe der Nockenkontur 5 beaufschlagte und an der Spiralkante 7 entlang gleitende Hebel 8 eine zunehmende Drehmomentbeaufschlagung erfährt.

Tatsächlich handelt es sich bei dem Hebel 8 um einen Zweiarmhebel, welcher um eine nach dem Ausführungsbeispiel mittlere Achse 9 drehbar in einem Gehäuse gelagert ist. Bei dem Gehäuse kann es sich um ein Gehäuse eines Kraftfahrzeug-Schlosses oder eines Zuziehantriebes, Fensterheberantriebes, Klappenantriebes etc. handeln. Der Hebel 8 arbeitet seinerseits auf ein Stellelement 10, und zwar mittelbar oder unmittelbar. Tatsächlich werden auf das Stellelement 10 Bewegungen des Hebels 8 um seine Achse 9 im Uhrzeigersinn übertragen, wie man beim Übergang von der Fig. 1A zur Fig. 1B und von der Fig. 2A zur Fig. 2B nachvollziehen kann.

Bei dem Stellelement 10 kann es sich im Falle eines Zuziehantriebes um eine nicht ausdrücklich dargestellte Drehfalle des zuvor bereits angesprochenen Kraftfahrzeug-Türschlosses handeln. Grundsätzlich kann das Stellelement 10 aber auch eine heb- und absenkbare Fensterscheibe sein, eine Kraftfahrzeugtür, eine Kraftfahrzeugklappe etc. Zu diesem Zweck absolviert der Hebel 8 die in den Figuren 1B bzw. 2B jeweils angedeutete Stellbewegung im Uhrzeigersinn um seine Achse 9, und zwar mit zunehmendem Drehmoment.

Wie bereits erläutert, ist erfindungsgemäß die Nockenkontur 5 zur Realisierung einer mehr als vollen Umdrehung (>360°) eingerichtet und in der Lage, nach dem Ausführungsbeispiel kann die Nockenkontur 5 eine Drehbewegung von ca. 400° vollführen. Der Hebel 8 ist als Zweiarmhebel mit einem ersten Arm 8a und einem weiteren zweiten Arm 8b ausgerüstet. Der weitere zweite Arm 8b wechselwirkt mit dem Stellelement 10. Demgegenüber liegt der erste Arm 8a an der Nockenkontur 5 bzw. ihrer Spiralkante 7 an und wird durch die Gegenuhrzeigersinnbewegung des Schneckenrades 3 im Uhrzeigersinn um seine Achse 9 verschwenkt.

Dazu taucht der zweiarmige Hebel 8 mit seinem einen ersten Arm 8a in der Grundstellung nach den Figuren 1A und 2A in die Ausnehmung 6 des Nockenrades 5 ein. Ausgehend von dieser Grundstellung nach den Figuren 1A und 2A sowie dem zugehörigen Stellwinkel von 0° für die Nockenkontur 5 und damit das Schneckenrad 3 führt nun eine Drehbewegung des Schneckenrades 3 und damit der Nockenkontur 5 um die Achse 4 im Gegenuhrzeigersinn dazu, dass die Spiralkante 7 der Nockenkontur 5 gegen den Arm 8a des Hebels 8 fährt. Im gezeigten Beispielfall erstreckt sich die Nockenkontur 5 und damit die Spiralkante 7 in einer zum Schneckenrad 3 parallelen Ebene. Durch den wachsenden Abstand der Spiralkante 7 von der Achse 4 des Schneckenrades 3 wird der Arm 8a des Hebels 8 zunehmend um die Achse 9 verschwenkt, und zwar im Uhrzeigersinn und erfährt dadurch das Stellelement 10 die gewünschte Beaufschlagung.

Dadurch, dass bei diesem Vorgang die Nockenkontur 5 eine mehr als volle Umdrehung von über 360° absolviert, kann insgesamt die vom Elektromotor 1 zur Verfügung gestellte Übersetzung erhöht werden, mit der im Endeffekt der Hebel 8 beaufschlagt wird. Um dennoch den Elektromotor 1 am Ende dieser Bewegung zielgenau abbremsen und stoppen zu können, ist der Hebel 8 mit wenigstens einem ersten Hebelanschlag 11 und das Schneckenrad 3 mit einem Radanschlag 12 ausgerüstet, wobei beide Anschläge 11, 12 positionsabhängig wechselwirken. Die positionsunabhängige Wechselwirkung meint, dass beide Anschläge 11, 12 je nach der Position des Schneckenrades 3 einerseits und des Hebels 8 andererseits miteinander wechselwirken oder eben nicht, wobei eine Wechselwirkung des ersten Hebelanschlages 11 und des Radanschlages 12 nach dem Ausführungsbeispiel erst dann erfolgt, wenn das Schneckenrad 3 die mehr als volle Umdrehung von ca. 400° im Beispielfall absolviert hat. D. h., der erste Hebelanschlag 11 wechselwirkt mit dem Radanschlag 12 nach mehr als der vollen Umdrehung des Schneckenrades 3 als Endanschlag 11, 12. Diese Situation ist in den Figuren 1B und 2B dargestellt.

Tatsächlich erkennt man, dass der Radanschlag 12 zunächst einmal außenumfangsseitig des Schneckenrades 3 auf dem Schneckenrad 3 angebracht ist, und zwar ebenso wie die Nockenkontur 5 auf der in den Figuren dargestellten Oberseite bzw. Frontseite des Schneckenrades 3. Dadurch vollführt der Radanschlag 12 ausgehend von der Grundstellung nach den Figuren 1A und 2A die Gegenuhrzeigersinnbewegung um die Achse 4 und erreicht am Ende der Stellbewegung von ca. 400° im Beispielfall die Position nach den Figuren 1B bzw. 2B. Der erste Hebelanschlag **11** findet sich in der Grundstellung nach den Figuren 1A und 2A im Innern der Ausnehmung 6 in unmittelbarer Nachbarschaft zur Achse 4 des Schneckenrades 3. Durch die Gegenuhrzeigersinndrehung des Schneckenrades 3 kommt die Spiralkante 7 zur Anlage an dem Arm 8a des Hebels 8 bzw. am ersten Hebelanschlag 11, sodass der Arm 8a in Anlage an der Spiralkante 7 zunehmend radial auswärts mit Bezug zur Achse 4 verschwenkt wird. Dadurch absolviert der Hebel 8 die in den Figuren 1B bzw. 2B dargestellte Uhrzeigersinnbewegung und sorgt der weitere zweite Arm 8b des Hebels 8 für die Beaufschlagung des Stellelementes 10.

Erst am Ende der Spiralkante 7 gelangt der erste Hebelanschlag **11** in den Einflussbereich des Radanschlages 12 bzw. schwenkt in dessen Bahn außenumfangsseitig des Schneckenrades 3 ein, sodass eine weitere Drehbewegung des Schneckenrades 3 im Gegenuhrzeigersinn abgebremst wird, weil der Radanschlag 12 gegen den dann in seine Bewegungsbahn eingeschwenkten ersten Hebelanschlag 11 fährt bzw. gefahren ist. Folgerichtig fungieren der erste Hebelanschlag 11 und der Radanschlag 12 nach mehr als der vollen Umdrehung des Schneckenrades 3 zusammengenommen als Endanschlag 11, 12.

Zu diesem Zweck ist der erste Hebelanschlag **11** an einem achsfernen Ende des Hebels 8 angeordnet, nach dem Ausführungsbeispiel am achsfernen Ende des einen bzw. ersten Hebelarmes 8a. Außerdem ist die Auslegung im Rahmen des ersten Ausführungsbeispiels nach den Figuren 1A und 1B so getroffen, dass der erste Hebelanschlag **11** mit der Nockenkontur 5 als weiterem Endanschlag wechselwirkt. Dazu verfügt die Nockenkontur 5 über die achsnahe Ausnehmung 6 für den Hebel 8 und wechselwirkt die fragliche Ausnehmung 6 mit dem ersten Hebelanschlag 11 zu Beginn der Drehbewegung des Schneckenrades 3 als weiterer Endanschlag 6, 11. Das ist in der Figur 1A dargestellt, in welcher man erkennt, dass zu Beginn der Drehbewegung des Schneckenrades 3 der Hebel 8 bzw. sein einer erster Hebelarm 8a in die Ausnehmung 6 der Nockenkontur 5 eintaucht. Der am achsfernen Ende des Hebels 8 bzw. des einen ersten Hebelarmes 8a angeordnete erste Hebelanschlag 11 fährt nun in dieser Grundstellung nach der Fig. 1A gegen die Ausnehmung 6, welche folglich zusammen mit dem ersten Hebelanschlag 11 den weiteren Endanschlag 6, 11 definiert.

In den Figuren 2A und 2B ist eine Variante dergestalt wiedergegeben, dass zwar nach wie vor der erste Hebelanschlag 11 realisiert ist und auch nach mehr als der vollen Umdrehung des Schneckenrades 3 zusammen mit dem Radanschlag 12 als Endanschlag 11, 12 wechselwirkt, wie dies die Fig. 2B deutlich macht. Allerdings ist die Situation zu Beginn der Drehbewegung des Schneckenrades 3 eine andere, weil in diesem Fall in der Fig. 2A der erste Hebelanschlag 11 nicht gegen die Ausnehmung 6 bzw. den Rand der Ausnehmung 6 fährt sondern vielmehr hiervon beabstandet ist. Um dennoch eine mechanisch definierte und festgelegte Position zu realisieren, ist im Ausführungsbeispiel nach den Fig. 2A und 2B der Hebel 8 mit einem weiteren zweiten Hebelanschlag 13 ausgerüstet. Wie der erste Hebelanschlag 11, so wechselwirkt auch der zweite Hebelanschlag 13 mit dem Radanschlag 12 positionsabhängig. Tatsächlich beobachtet man eine Wechselwirkung des weiteren zweiten Hebelanschlages 13 mit dem Radanschlag 12 zu Beginn der Drehbewegung des Schneckenrades 3 in der Fig. 2A, wohingegen der erste Hebelanschlag 11 - wie gewohnt - am Ende der Drehbewegung des Schneckenrades 3 mit dem Radanschlag 12 als Endanschlag 11, 12 wechselwirkt.

Tatsächlich definieren der zweite Hebelanschlag 13 und der Radanschlag 12 zu Beginn der Drehbewegung des Schneckenrades 3 einen weiteren Endanschlag 13, 12. Das ist in der Fig. 2A dargestellt und kann unmittelbar nachvollzogen werden.

Dazu handelt es sich bei dem Radanschlag 12 um einen stegartigen Anschlag 12, der nicht nur außenumfangsseitig des Schneckenrades 3 an seiner Frontseite bzw. Oberseite angeordnet ist, sondern sich darüber hinaus radial im Vergleich zur Achse 4 des Schneckenrades 3 erstreckt. Auf diese Weise verfügt der stegartige Radanschlag 12 über zwei Anschlagflächen 12a, 12b, die sich mit Bezug zu dem Steg gegenüberliegen. Die Anschlagfläche 12a ist in der Bewegungsrichtung (im Gegenuhrzeigersinn) frontseitig des stegartigen Anschlages 12 realisiert und vorgesehen, während die weitere zweite Anschlagfläche 12b über eine rückwärtige Anordnung verfügt. Vergleichbares gilt auch für das erste Ausführungsbeispiel. Dadurch kommt es zu Beginn der Drehbewegung im Rahmen der Darstellung nach der Fig. 2A dazu, dass der Anschlag 12 mit der Anschlagfläche 12b an dem zweiten Hebelanschlag 13 des Hebels 8 anliegt.

Wenn nun ausgehend von dieser Grundstellung nach der Fig. 2A das Schneckenrad 3 im Gegenuhrzeigersinn um seine Achse 4 verfahren wird, bewegt sich der Anschlag 12 von dem zweiten Hebelanschlag 13 fort, bis der Anschlag 12 die Position nach der Fig. 2B eingenommen hat. In dieser Funktionsstellung ist der Hebel 8 in die Position nach der Fig. 2B radial auswärts mithilfe der Nockenkontur 5 verschwenkt worden, sodass der erste Hebelanschlag 11 in die Bahn des Anschlages 12 eintaucht und der Anschlag 12 mit seiner frontseitigen Anschlagfläche 12a gegen den ersten Hebelanschlag 11 fährt. In beiden Fällen wird der elektromotorische Antrieb jeweils mechanisch gestoppt und abgebremst.

Nicht dargestellt ist die weitere Möglichkeit, dass die Nockenkontur 5 nicht über eine in der Ebene orientierte Spiralkante 7 verfügt, sondern stattdessen mit einer wendelförmig verlaufenden Spiralkontur ausgerüstet ist. In diesem Fall kann der mit der Nockenkontur 5 wechselwirkende Arm 8a des Hebels 8 beispielsweise mit einer Rolle ausgerüstet sein, welche der wendelförmigen Spiralkontur der Nockenkontur 5 räumlich folgt. Daher absolviert der zweiarmige Hebel 8 keine Schwenkbewegung um seine Achse 9, sondern wird vielmehr um eine in der Zeichenebene liegende Achse aufwärts bewegt, sodass als Folge hiervon der andere Arm 8b eine Abwärtsbewegung vollführt, die wiederum auf das Stellelement 10 übertragen werden kann.

### Bezugszeichenliste:

- 1: Elektromotor
- 2: Abtriebsschnecke
- 3: Antriebsrad / Schneckenrad
- 4: Achse
- 5: Nockenkontur
- 6: achsnahe Ausnehmung
- 7: Spiralkante
- 8: Hebel
- 9: mittlere Achse
- 10: Stellelement
- 11: erster Hebelanschlag
- 12: Radanschlag
- 11, 12: Endanschlag
- 12a, 12b: Anschlagflächen
- 13: zweiter Hebelanschlag
- 13, 12: weiterer Endanschlag

## Patentansprüche

1. Elektromotorischer Antrieb für kraftahrzeug-technische Anwendungen, mit einem Elektromotor (1), ferner mit einem mit dem Elektromotor (1) wechselwirkenden Antriebsrad (3), insbesondere Schneckenrad (3), mit Nockenkontur (5), und mit einem von der Nockenkontur (5) beaufschlagbaren Hebel (8), wobei die Nockenkontur (5) zur Beaufschlagung des Hebels (8) eine volle Umdrehung (360°) vollführt,
**dadurch gekennzeichnet, dass**
die Nockenkontur (5) zur Realisierung einer mehr als vollen Umdrehung (>360°) eingerichtet ist, wobei der Hebel (8) mit wenigstens einem ersten Hebelanschlag (11) und das Antriebsrad (3), insbesondere Schneckenrad (3), mit einem Radanschlag (12) ausgerüstet ist, wobei beide Anschläge (11, 12) positionsabhängig wechselwirken, wobei der Hebel (8) mit einem weiteren zweiten Hebelanschlag (13) ausgerüstet ist, wobei der erste Hebelanschlag (11) mit dem Radanschlag (12) nach mehr als der vollen Umdrehung des Antriebsrades (3), insbesondere Schneckenrades (3), als Endanschlag (11, 12) wechselwirkt und der zweite Hebelanschlag (13) mit dem Radanschlag (12) zu Beginn der Drehbewegung des Antriebsrades (3), insbesondere Schneckenrades (3) als weiterer Endanschlag (13, 12) zusammenwirkt.

2. Antrieb nach Anspruch 1, **dadurch gekennzeichnet, dass** der erste Hebelanschlag (11) mit dem Radanschlag (12) nach mehr als der vollen Umdrehung des Antriebsrades (3), insbesondere Schneckenrades (3), als Endanschlag (11, 12) wechselwirkt.

3. Antrieb nach Anspruch 1 oder 2, **dadurch gekennzeichnet, dass** der erste Hebelanschlag (11) an einem achsfernen Ende des Hebels (8) angeordnet ist.

4. Antrieb nach einem der Ansprüche 1 bis 3, **dadurch gekennzeichnet, dass** der erste Hebelanschlag (11) mit der Nockenkontur (5) als weiterem Endanschlag wechselwirkt.

5. Antrieb nach Anspruch 4, **dadurch gekennzeichnet, dass** die Nockenkontur (5) eine vorzugsweise achsnahe Ausnehmung (6) für den Hebel (8) aufweist.

6. Antrieb nach Anspruch 5, **dadurch gekennzeichnet, dass** die Ausnehmung (6) mit dem ersten Hebelanschlag (11) zu Beginn der Drehbewegung des Antriebsrades (3), insbesondere Schneckenrades (3), als weiterer Endanschlag (6, 11) wechselwirkt.

7. Antrieb nach Anspruch 1, **dadurch gekennzeichnet, dass** der weitere zweite Hebelanschlag (13) mit dem Radanschlag (12) positionsabhängig wechselwirkt.

8. Kraftfahrzeug-Schloss, insbesondere Kraftfahrzeug-Türschloss, **gekennzeichnet durch** einen elektromotorischen Antrieb nach einem der Ansprüche 1 bis 7.

## Claims

1. An electromotive drive for motor vehicle applications, comprising an electric motor (1), further comprising a drive wheel (3), in particular a worm wheel (3), interacting with the electric motor (1) and having a cam contour (5), and comprising a lever (8) which can be acted upon by the cam contour (5), the cam contour (5) completing a full revolution (360°) in order to act upon the lever (8),
**characterized in that**
the cam contour (5) is designed to execute more than a full rotation (>360°), the lever (8) being equipped with at least a first lever stop (11) and the drive wheel (3), in particular the worm wheel (3), being equipped with a wheel stop (12), both stops (11, 12) interacting in a position-dependent manner, the lever (8) being equipped with a further second lever stop (13), the first lever stop (11) interacting with the wheel stop (12) as an end stop (11, 12) after more than the full revolution of the drive wheel (3), in particular of the worm wheel (3), and the second lever stop (13) cooperating with the wheel stop (12) as a further end stop (13, 12) at the beginning of the rotational movement of the drive wheel (3), in particular of the worm wheel (3).

2. The drive according to claim 1, **characterized in that** the first lever stop (11) interacts with the wheel stop (12) as an end stop (11, 12) after more than the full revolution of the drive wheel (3), in particular of the worm wheel (3).

3. The drive according to claim 1 or claim 2, **characterized in that** the first lever stop (11) is arranged at an end of the lever (8) away from the axis.

4. The drive according to any of claims 1 to 3, **characterized in that** the first lever stop (11) interacts with the cam contour (5) as a further end stop.

5. The drive according to claim 4, **characterized in that** the cam contour (5) has a recess (6), preferably close to the axis, for the lever (8).

6. The drive according to claim 5, **characterized in that** the recess (6) interacts with the first lever stop (11) as a further end stop (6, 11) at the beginning of the rotational movement of the drive wheel (3), in particular of the worm wheel (3).

7. The drive according to claim 1, **characterized in that** the further second lever stop (13) interacts with the wheel stop (12) in a position-dependent manner.

8. A motor vehicle latch, in particular a motor vehicle door latch, **characterized by** an electromotive drive according to any of claims 1 to 7.

## Revendications

1. Entraînement par moteur électrique pour des applications dans le domaine technique de l'automobile, comportant un moteur électrique (1), comportant en outre une roue d'entraînement (3), en particulier une roue tangente (3), interagissant avec le moteur électrique (1), comportant un contour à cames (5), et comportant un levier (8) pouvant être sollicité par le contour à cames (5), dans lequel le contour à cames (5) effectue une rotation complète (360°) pour la sollicitation du levier (8),
**caractérisé en ce que**
le contour à cames (5) est conçu pour la réalisation d'une rotation plus que complète (> 360°), dans lequel le levier (8) est équipé d'au moins une première butée de levier (11) et la roue d'entraînement (3), en particulier la roue tangente (3), est équipée d'une butée de roue (12), dans lequel les deux butées (11, 12) interagissent en fonction d'une position, dans lequel le levier (8) est équipé d'une seconde butée de levier (13) supplémentaire, dans lequel la première butée de levier (11) interagit avec la butée de roue (12) après la rotation plus que complète de la roue d'entraînement (3), en particulier de la roue tangente (3), en tant que butée de fin de course (11, 12), et la seconde butée de levier (13) interagit avec la butée de roue (12) au début du mouvement de rotation de la roue d'entraînement (3), en particulier de la roue tangente (3), en tant que butée de fin de course (13, 12) supplémentaire.

2. Entraînement selon la revendication 1, **caractérisé en ce que** la première butée de levier (11) interagit avec la butée de roue (12) après la rotation plus que complète de la roue d'entraînement (3), en particulier de la roue tangente (3), en tant que butée de fin de course (11, 12).

3. Entraînement selon la revendication 1 ou 2, **caractérisé en ce que** la première butée de levier (11) est disposée au niveau d'une extrémité du levier (8), laquelle est éloignée d'un axe.

4. Entraînement selon l'une des revendications 1 à 3, **caractérisé en ce que** la première butée de levier (11) interagit avec le contour à cames (5) en tant que butée de fin de course supplémentaire.

5. Entraînement selon la revendication 4, **caractérisé en ce que** le contour à cames (5) présente un évidement (6) pour le levier (8), lequel évidement est de préférence proche d'un axe.

6. Entraînement selon la revendication 5, **caractérisé en ce que** l'évidement (6) interagit avec la première butée de levier (11) au début du mouvement de rotation de la roue d'entraînement (3), en particulier de la roue tangente (3), en tant que butée de fin de course (6, 11) supplémentaire.

7. Entraînement selon la revendication 1, **caractérisé en ce que** la seconde butée de levier (13) supplémentaire interagit avec la butée de roue (12) en fonction d'une position.

8. Serrure de véhicule automobile, en particulier serrure de portière de véhicule automobile, **caractérisée par** un entraînement par moteur électrique selon l'une des revendications 1 à 7.
